# EUROPÄISCHE PATENTSCHRIFT

(11) **EP 1 474 612 B1**
(45) Veröffentlichungstag und Bekanntmachung des Hinweises auf die Patenterteilung: **06.05.2009**
(21) Anmeldenummer: 02781134.8
(22) Anmeldetag: 15.10.2002
(51) Int. Cl.: F15B 13/00, F16K 27/00

(54) **MEHRFACHVENTILANORDNUNG FÜR STRÖMENDE MEDIEN**
MULTIPLE VALVE ARRANGEMENT FOR FLOWING MEDIA
SYSTEME DE CLAPETS MULTIPLES POUR ECOULEMENT DE FLUIDES

(30) Priorität: 02.02.2002 DE 10204250
(43) Veröffentlichungstag der Anmeldung: 10.11.2004
(73) Patentinhaber: ROBERT BOSCH GMBH, 70442 Stuttgart (DE)
(72) Erfinder: BAUER, Bertram, 76571 Gaggenau (DE); SCHRADER, Jens, 77830 Buehlertal (DE); STRASSBURGER, Klaus, 77836 Rheinmuenster (DE); PAESSLER, Wolfgang, 77833 Ottersweier (DE)
(86) Internationale Anmeldenummer: PCT/DE2002/003868
(87) Internationale Veröffentlichungsnummer: WO 2003/067095

(56) Entgegenhaltungen:
- WO-A-01/16512
- DE-B- 1 246 337
- US-A- 5 341 841
- US-A- 5 653 259

## Beschreibung

### Stand der Technik

Die Erfindung geht aus von einer Mehrfachventilanordnung für strömende Medien, wie Luft, Wasser oder sonstigem Fluid, nach dem Oberbegriff des Anspruchs 1.

Solche Mehrfachventilanordnungen sind allgemein bekannt (siehe, nur zum Beispiel, die DE-B-1 246 337) und dienen zum fluidtechnisch einfachen Verbinden von Ventilen ohne separate Druckleitungen.

Es ist auch allgemein bekannt Ventilkanäle in einem Elastomer auszubilden und mit einer Abdichtplatte abzudichten. Die Verbindung von Elastomer und Abdichtplatte erfolgt durch Verschraubung. Auf der Rückseite des Elastomer sind Magnetventile positioniert, die mittels Durchgangsbohrungen mit den Kanälen verbunden sind.

### Vorteile der Erfindung

Die erfindungsgemäße Mehrfachventilanordnung mit den Merkmalen des Anspruchs 1 hat den Vorteil einer fluiden Verschaltung einer Vielzahl von Ventilen auf kleinstem Bauraum. Die Kanalquerschnitte zur Verbindung der Ventile können groß ausgelegt werden, da sich die steifen Kanalplatten - anders als das bekannte Elastomer - beim Aufpressen der Dichtplatte zur Erzielung des Dichtsitzes nicht verformen. Für eine gewünschte Modifizierung der Verschaltung ist in vielen Fällen der Austausch nur einer der drei Platten des Plattensandwiches nötig. Durch den Sandwichaufbau mit der damit gegebenen Möglichkeit der Mehrschicht-Kanalführung können sehr aufwendige, fluidtechnische Verschaltungen der Ventile ausgeführt werden, wobei auch ein Überkreuzen der Strömungskanäle untereinander möglich ist. Die erfindungsgemäße Mehrfachventilanordnung ist besonders fertigungsgerecht und reparaturfreundlich und damit kostensparend.

Durch die in den weiteren Ansprüchen aufgeführten Maßnahmen sind vorteilhafte Weiterbildungen und Verbesserungen der im Anspruch 1 angegebenen Mehrfachventilanordnung möglich.

Gemäß einer vorteilhaften Ausführungsform der Erfindung sind in die Dichtplatte Durchgangsöffnungen eingebracht, die ausgewählte Strömungskanäle in beiden Kanalplatten miteinander verbinden. Durch diese konstruktive Maßnahme können beliebige Verbindungen zwischen den Kanälen in der oberen und unteren Kanalplatte und damit zwischen den Ventilen einschließlich eines Überkreuzens der Kanäle untereinander in einfacher Weise realisiert werden.

Gemäß einer vorteilhaften Ausführungsform der Erfindung sind die die Ein- und Auslaßöffnungen für die Ventile tragenden, rückseitigen Plattenflächen der Kanalplatten mit Dichtungselementen besetzt, die die Dichtheit zwischen den Kanalplatten und dem Gehäuse herstellen. Dadurch wird beim Einsetzen des Plattensandwiches in das Gehäuse und Aufbringen einer minimalen Anpreßkraft zwischen Gehäuse und Plattensandwich die Dichtheit zwischen den Ein- und Auslaßöffnungen und den im Gehäuse angeordneten Ventilen durch die Montage automatisch gewährleistet.

Gemäß einer vorteilhaften Ausführungsform der Erfindung ist das Gehäuse zweiteilig aus zwei Gehäusehälften zusammengesetzt, von denen jede auf den Dichtungselementen einer der Kanalplatten aufliegt, und sind die beiden Gehäusehälften unter Aufbringen einer Anpreßkraft auf das Plattensandwich miteinander verspannt. Die Verspannung ist vorzugsweise mittels einer form- und kraftschlüssigen Verrastung vorgenommen, die nach Art eines in Gehäuselängsrichtung verlaufenden Reißverschlusses ausgebildet ist. Durch diese konstruktiven Maßnahmen wird eine gleichmäßige Verteilung der Flächenpressung über das gesamte Plattensandwich erreicht, so daß alle Dichtungselemente und Dichtungskanten an den Kanalplatten eine gleichmäßige Anpreßkraft erhalten.

Gemäß einer vorteilhaften Ausführungsform der Erfindung sind an den beiden Längsseiten der Gehäusehälften einander zugekehrte Stege zahnartig so ausgebildet, daß die Stege der einen Gehäusehälfte in die zwischen den Stegen der anderen Gehäusehälfte vorhandenen Lücken formschlüssig einschiebbar sind. Die Verrastung der Gehäusehälften erfolgt an den Stegen, indem ein in Gehäuselängsrichtung über je eine der ineinander verzahnten beiden Stegreihen hinweggeführter Keilklemmverbinder mit voneinander abgekehrten Keilflächen entsprechende Keilflächen hintergreift, die an in Schieberichtung aufeinanderfolgenden Stegen wechselweise angeordnet sind. Eine solche Keilklemmverbindung zwischen den beiden Gehäusehälften ermöglicht den Ausgleich von Fertigungstoleranzen und gewährleistet eine gleichmäßige Kraftverteilung auf alle Dichtflächen.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Ansicht einer Mehrfachventilanordnung in Explosionsdarstellung,
- Fig. 2: einen Schnitt längs der Linie II - 11 in Fig. 1,
- Fig. 3: einen Schnitt längs der Linie III - III in Fig. 1.

### Beschreibung des Ausführungsbeispiels

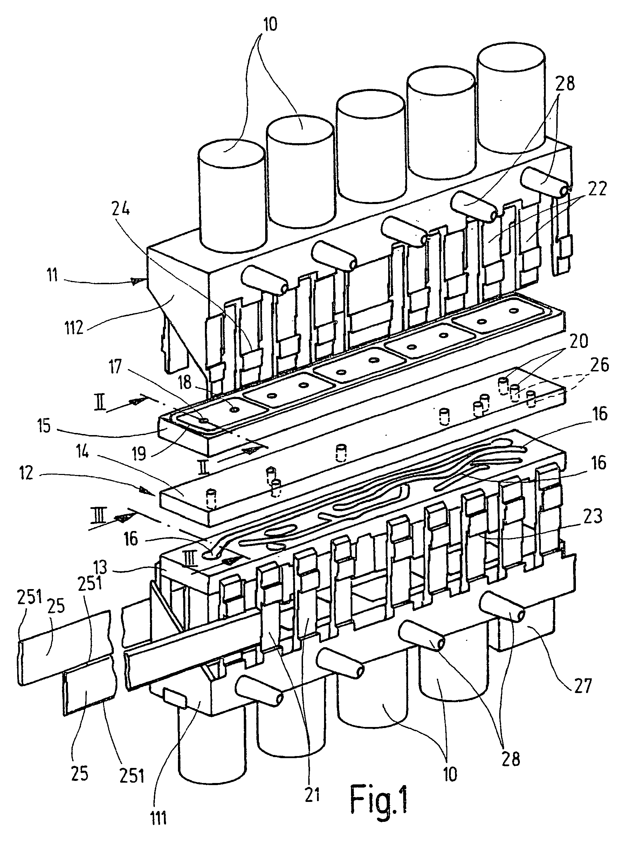

Die in Fig. 1 in Explosionsdarstellung zu sehende, pneumatische Mehrfachventilanordnung als Ausführungsbeispiel für eine Mehrfachventilanordnung für ein allgemeines, strömendes Medium, wie Luft, Wasser, Hydrauliköl u. dgl., umfaßt insgesamt neun pneumatische Ventile, wobei die Anzahl der pneumatischen Ventile beliebig sein kann. Von den pneumatischen Ventilen sind der Übersichtlichkeit halber lediglich die Aktoren oder Aktuatoren 10 zur Betätigung der Ventile dargestellt. Diese Aktuatoren 10 können pneumatischer oder elektromagnetischer Art sein. Auf die Darstellung der von den Aktuatoren 10 betätigten Ventilglieder der einzelnen pneumatischen Ventile ist verzichtet worden.

Die Mehrfachventilanordnung weist ein Gehäuse 11 auf, das aus zwei Gehäusehälfte 111 und 112 zusammengesetzt ist. In jeder Gehäusehälfte 111 und 112 ist eine bestimmte Anzahl der pneumatischen Ventile integriert. Im Ausführungsbeispiel der Fig. 1 sind in der oberen Gehäusehälfte 112 fünf Ventile integriert und damit fünf Aktuatoren 10 zur Ventilbetätigung vorhanden, während in der unteren Gehäusehälfte 111 nur vier Ventile vorgesehen sind. Für jedes Ventil ist am Gehäuse 11 ein Ventilanschluß 28 vorgesehen. Ein am Gehäuse 11 noch vorhandener Anschluß für den gemeinsamen Zufluß zu allen Ventilen ist in Fig. 1 nicht zu sehen.

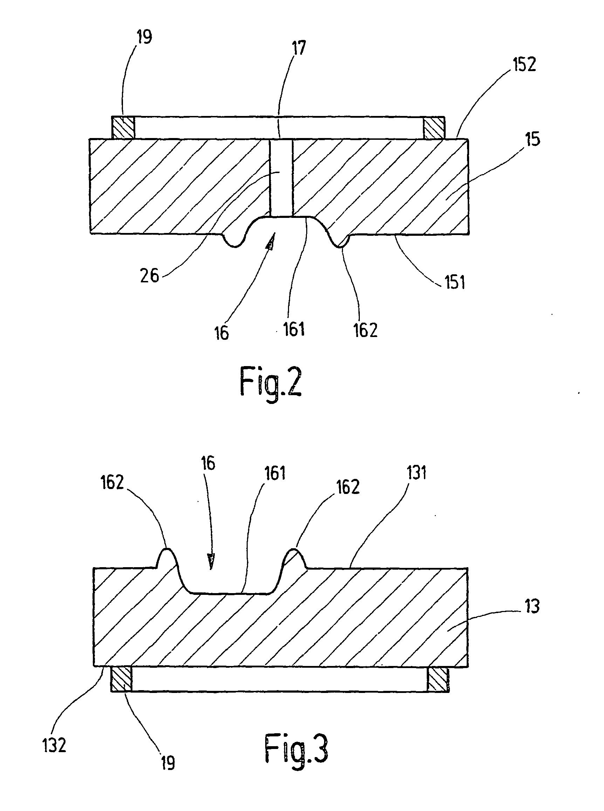

Im Gehäuse 11 ist ein Sandwich 12, bestehend aus drei aufeinanderliegenden Platten 13, 14, 15 aufgenommen. Dieses Sandwich 12 umfaßt zwei außenliegende Kanalplatten 13 und 15 und eine dazwischenliegende, mittlere Dichtplatte 14. In den der Dichtplatte 14 zugekehrten, vorderseitigen Plattenflächen 131, 151 der Kanalplatten 13, 15 sind Strömungskanäle 16 ausgebildet, und auf den von der Dichtplatte 14 abgekehrten, rückseitigen Plattenflächen 132, 152 sind Ein- und Auslaßöffnungen 17, 18 für die Ventile sowie Dichtungselemente 19 angeordnet, welche die Dichtheit zwischen den Kanalplatten 13, 15 und den Gehäusehälften 111, 112 herstellen. Die Ein- und Auslaßöffnungen 17, 18 sind jeweils mit einem der Strömungskanäle 16 über die Dichtplatte 14 durchstoßende Bohrung 26 verbunden und werden von den Ventilgliedern der Ventile geschlossen oder freigegeben. In Fig. 1 sind die Strömungskanäle 16 nur in der unteren Kanalplatte 13 und die Einlaß- und Auslaßöffnungen 17, 18 nebst Dichtungselementen 19 nur in der oberen Kanalplatte 15 zu sehen. In den Querschnittsdarstellungen von Fig. 2 für die obere Kanalplatte 15 und von Fig. 3 für die untere Kanalplatte 13 sind die Strömungskanäle 16 und Dichtungselemente 19 vergrößert dargestellt. Wie dort deutlicher zu sehen ist, sind die Strömungskanäle 16 als in die Kanalplatten 13, 15 eingearbeitete Rinnen 161 ausgeführt, die seitlich von erhabenen Dichtkanten 162 begrenzt sind. Die Geometrie der Strömungskanäle 16 kann beliebig ausgeführt werden, wobei darauf zu achten ist, daß die Strömungskanäle 16 in der gleichen Kanalplatte 13 oder 15 keine Verbindung zueinander haben. In der mittleren Dichtplatte 14 sind Durchgangsöffnungen 20 vorhanden, die vorzugsweise als Bohrungen ausgeführt sind. Die Durchgangsöffnungen 20 sind nur an solchen Stellen der Dichtplatte 14 vorhanden, wo ausgewählte Strömungskanäle 16 in der unteren Kanalplatte 13 mit ausgewählten Strömungskanälen 16 in der oberen Kanalplatte 15 verbunden sein sollen.

Nach Zusammensetzen der Kanalplatten 13 - 15 zu dem Sandwich 12 werden die beiden Gehäusehälften 111 und 112 von unten bzw. von oben her auf die Kanalplatten 13 und 15 aufgeschoben, wobei sie sich auf die Dichtungselemente 19 auf den rückseitigen Plattenflächen 132, 152 der Kanalplatten 13, 15 auflegen. Durch Verspannen der beiden Gehäusehälften 111, 112 miteinander wird die untere Gehäusehälfte 111 auf die Dichtungselemente 19 an der unteren Kanalplatte 13 und die obere Gehäusehälfte 112 auf die Dichtungselemente 19 an der oberen Kanalplatte 15 sowie die Dichtplatte 14 auf die Dichtkanten 162 an den beiden Kanalplatten 13, 15 aufgepreßt und so eine die Dichtheit gewährleistende gleichmäßige Kraftverteilung auf allen Dichtflächen erreicht.

Die Verspannung der beiden Gehäusehälften 111, 112 erfolgt mittels einer form- und kraftschlüssigen Verrastung nach Art eines auf jeder Seite des Gehäuses 11 in Gehäuselängsrichtung verlaufenden Reißverschlusses. Hierzu sind an den beiden Längsseiten jeder Gehäusehälfte 111, 112 einander zugekehrte, zahnartige Reihen von Stegen 21 bzw. 22 so ausgebildet, daß die Stege 21 an der unteren Gehäusehälfte 111 in die zwischen den Stegen 22 an der oberen Gehäusehälfte 112 vorhandenen Lücken und umgekehrt formschlüssig einschiebbar sind. An den Stegen 21 der beiden Stegreihen an der unteren Gehäusehälfte 111 sind nahe deren freiem Ende vorspringende Keilflächen 23 angeformt. Gleiche Keilflächen 24 finden sich nahe der freien Enden der Stege 22 der beiden Stegreihen an der oberen Gehäusehälfte 112, wobei die Keilflächen 23, 24 so angeordnet sind, daß bei ineinandergesteckten Stegreihen die Keilflächen 23, 24 einander zugekehrt und voneinander beabstandet sind. Unter Zusammenpressen der beiden Gehäusehälften 111, 112 (wodurch der Abstand der Keilflächen 23, 24 voneinander sich etwas vergrößert) wird auf jeder Seite des Gehäuses 11 ein Keilklemmverbinder 25 eingeschoben, der auf voneinander abgekehrten Längsseiten eine den Keilflächen 23, 24 angepaßte Schräge 251 aufweist. Dieser Keilklemmverbinder 25 wird mit seinen Schrägen 251 unter den Keilflächen 23, 24 an den Stegen 21, 22 hindurchgeführt, wobei eine Schrägfläche 251 abwechselnd an einer Keilfläche 23 eines Stegs 21 und an einer Keilfläche 24 des anderen Stegs 22 zur Anlage kommt, und verrastet so die beiden Gehäusehälften 111, 112 unter Aufbringen einer auf das Sandwich 12 wirkenden Druckkraft miteinander.

In der beschriebenen Mehrfachventilanordnung ist es möglich, auch Sensoren zur Sensierung des strömenden Mediums, im Ausführungsbeispiel also der Luft, unterzubringen. Mit solchen Sensoren können beispielsweise die Temperatur, die Viskosität oder sonstige Parameter des strömenden Mediums erfaßt werden. Ein solcher Sensor wird anstelle eines Ventils eingesetzt, so daß er an die Stelle eines Aktuators 10 am Gehäuse 11 angeordnet wird. Die Fühler dieser Sensoren tauchen dabei in entsprechende Einlaß- oder Auslaßöffnungen 17, 18 ein und kommen somit in Kontakt mit dem strömenden Medium. Ein solcher Sensor 27 ist in Fig. 1 in der unteren Gehäusehälfte 111 angeordnet.

## Patentansprüche

1. Mehrfachventilanordung für strömende Medien, wie Luft, Wasser oder sonstiges Fluid, wobei die Anordnung einen sandwichartigen Plattenaufbau (12) aus zwei außenliegenden Kanalplatten (13, 15) und einer dazwischenliegenden, mittleren Platte (14) sowie ein den Plattenaufbau (12) umschließendes Gehäuse (11) aufweist und wobei in den der mittleren Platte (14) zugekehrten, vorder eitigen Plattenflächen (131, 151) der Kanalplatten (13, 15) von der mittleren Platte (14) abgedeckte Strömungskanäle (16) ausgebildet sind und auf den von der mittleren Platte (14) abgekehrten, rückseitigen Plattenflächen (132, 152) der Kanalplatten (13, 15) mit den Strömungskanälen (16) in Verbindung stehende Ein- und Auslaßöffnungen (17, 18) für die Ventile angeordnet sind, **dadurch gekennzeichnet, daß** die mittlere Platte (14) eine Dichtplatte ist und daß die Strömungskanäle (16) als in die Kanalplatten (13, 15) eingeformte Rinnen (161) ausgeführt sind, die seitlich von erhabenen Dichtkanten (162) begrenzt sind.

2. Mehrfachventilanordnung nach Anspruch 1, **dadurch gekennzeichnet, daß** auf den rückseitigen Plattenflachen (132, 152) der Kanalplatten (13, 15) Dichtungselemente (19) angeordnet sind, welche die Dichtheit zwischen den Kanalplatten (13, 15) und dem Gehäuse (11) herstellen.

3. Mehrfachventilanordnung nach Anspruch 1 oder 2, **dadurch gekennzeichnet, daß** in der Dichtplatte (14) Durchgangsöffnungen (20) vorhanden sind, die ausgewählte Strömungskanäle (16) in beiden Kanalplatten (13, 15) miteinander verbinden.

4. Mehrfachventilanordnung nach Anspruch 2 oder 3, **dadurch gekennzeichnet, daß** das Gehäuse (11) zweiteilig und aus zwei Gehäusehälften (111, 112) zusammengesetzt ist, von denen jede auf den Dichtungselementen (19) einer der Kanalplatten (13,15) aufliegt, und daß die Gehäusehälften (111, 112) in Richtung ihrer Auflage miteinander verspannt sind.

5. Mehrfachventilanordnung nach Anspruch 4, **dadurch gekennzeichnet, daß** die Verspannung mittels einer form- und kraftschlüssigen Verrastung vorgenommen ist.

6. Mehrfachventilanordnung nach Anspruch 5, **dadurch gekennzeichnet, daß** die Verrastung nach Art eines zwischen den Gehäusehälften (111, 112) in Gehäuselängsrichtung verlaufenden Reißverschlusses ausgebildet ist.

7. Mehrfachventilanordnung nach Anspruch 6, **dadurch gekennzeichnet, daß** die reißverschlußartige Verrastung aus an den beiden Längsseiten der Genausehätften (111, 112), jeweils einander zugekehrten, zahnartigen Reihen von Stegen (21, 22) besteht, welche so ausgebildet sind, daß die Stege (21, 22) der einen Gehäusehälfte (111, 112) in die zwischen den Stegen (22, 21) der anderen Gehäusehälfte (112, 111) vorhandenen Lücken formschlüssig einschiebbar sind, und daß die Stege (21) der einen Gehäusehälfte (111) mit den Stegen (22) der anderen Gehäusehälfte (112) verrastet sind.

8. Mehrfachventilanordnung nach Anspruch 7, **dadurch gekennzeichnet, daß** die Verrastung mittels jeweils eines in Gehäuselängsrichtung über je eine der ineinander verzahnten beiden Stegreihen hinweggeführten Keilklemmverbinders (25) vorgenommen ist, der mit voneinander abgekehrten Schrägen (251) entsprechende Keilflächen (23, 24) hintergreift, die an in Schieberichtung aufeinanderfolgenden Stegen (21, 22) ausgebildet sind.

9. Mehrfachventilanordnung nach einem der Ansprüche 4-8, **dadurch gekennzeichnet, daß** an jeder Gehäusehälfte (111, 112) Aktuatoren (10) zur Betätigung von mit den Ein- und /oder Auslaßöffnungen (17, 18) auf der rückseitigen Plattenfläche (132, 152) der zugeordneten Kanalplatte (13, 15) zusammenwirkenden Ventilgliedern angeordnet sind.

10. Mehrfachventilanordnung nach einem der Ansprüche 4-9, **dadurch gekennzeichnet, daß** an mindestens einer Gehäusehälfte (111, 112) Sensoren (27) angeordnet sind, die mittels in die Ein- oder Auslaßöffnungen (17, 18) hineinragenden Fühlern das strömende Medium sensieren.

## Claims

1. Multiple valve arrangement for flowing media, such as air, water or another fluid, the arrangement having a sandwich-like plate construction (12) comprising two channel plates (13, 15) which lie on the outside, a central plate (14) which lies between them, and a housing (11) which encloses the plate construction (12), and flow channels (16) which are covered by the central plate (14) being formed in the front-side plate faces (131, 151) of the channel plates (13, 15), which front-side plate faces (131, 151) face the central plate (14), and inlet and outlet openings (17, 18) which are connected to the flow channels (16) being arranged for the valves on the rear-side plate faces (132, 152) of the channel plates (13, 15), which rear-side plate faces (132, 152) face away from the central plate (14), **characterized in that** the central plate (14) is a sealing plate, and **in that** the flow channels (16) are configured as grooves (161) which are formed into the channel plates (13, 15) and are delimited laterally by elevated sealing edges (162).

2. Multiple valve arrangement according to Claim 1, **characterized in that** sealing elements (19) which produce the sealing action between the channel plates (13, 15) and the housing (11) are arranged on the rear-side plate faces (132, 152) of the channel plates (13, 15).

3. Multiple valve arrangement according to Claim 1 or 2, **characterized in that** there are through openings (20) in the sealing plate (14) which connect selected flow channels (16) in both channel plates (13, 15) to one another.

4. Multiple valve arrangement according to Claim 2 or 3, **characterized in that** the housing (11) is in two pieces and is assembled from two housing halves (111, 112), of which each rests on the sealing elements (19) of one of the channel plates (13, 15), and **in that** the housing halves (111, 112) are stressed in the direction of their contact with one another.

5. Multiple valve arrangement according to Claim 4, **characterized in that** the stressing is carried out by means of a positively locking and non-positive latching means.

6. Multiple valve arrangement according to Claim 5, **characterized in that** the latching means is configured in the manner of a zip fastener which extends between the housing halves (111, 112) in the longitudinal direction of the housing.

7. Multiple valve arrangement according to Claim 6, **characterized in that** the zip fastener-like latching means consists of tooth-like rows of webs (21, 22) which face one another in each case on the two longitudinal sides of the housing halves (111, 112) and are configured in such a way that the webs (21, 22) of one housing half (111, 112) can be pushed positively into the gaps which are present between the webs (22, 21) of the other housing half (112, 111), and in such a way that the webs (21) of one housing half (111) are latched with the webs (22) of the other housing half (112).

8. Multiple valve arrangement according to Claim 7, **characterized in that** the latching is carried out by means of in each case one wedge-shaped clamping connector (25) which is guided away in the longitudinal direction of the housing via in each case one of the two web rows which are in toothing connection with one another, which wedge-shaped clamping connector (25) engages behind wedge faces (23, 24) which correspond to inclined slopes (251) which face away from one another, which wedge faces (23, 24) are formed on webs (21, 22) which follow one another in the pushing direction.

9. Multiple valve arrangement according to one of Claims 4 to 8, **characterized in that** actuators (10) for actuating valve elements which interact with the inlet and/or outlet openings (17, 18) on the rear-side plate face (132, 152) of the associated channel plate (13, 15) are arranged on each housing half (111, 112).

10. Multiple valve arrangement according to one of Claims 4 to 9, **characterized in that** sensors (27) which sense the flowing medium by means of sensing elements which protrude into the inlet or outlet openings (17, 18) are arranged on at least one housing half (111, 112).

## Revendications

1. Système de clapets multiples pour écoulement de fluides, comme de l'air, de l'eau ou un autre fluide, dans lequel le système présente une structure de plaque de type sandwich (12) constituée de deux plaques de canaux extérieures (13, 15) et d'une plaque centrale intermédiaire (14), ainsi qu'un boîtier (11) entourant la structure de plaque (12), et dans lequel, dans les surfaces de plaques (131, 151) des plaques de canaux (13, 15), du côté avant, tournées vers la plaque centrale (14), sont réalisés des canaux d'écoulement (16) recouverts par la plaque centrale (14), et sur les surfaces de plaques (132, 152) des plaques de canaux (13, 15) du côté arrière, opposées à la plaque centrale (14), sont pratiquées des ouvertures d'entrée et de sortie (17, 18) pour les clapets, en liaison avec les canaux d'écoulement (16), **caractérisé en ce que** la plaque centrale (14) est une plaque d'étanchéité et **en ce que** les canaux d'écoulement (16) sont réalisés sous forme de rigoles (161) formées dans les plaques de canaux (13, 15), qui sont limitées latéralement par des arêtes d'étanchéité rehaussées (162).

2. Système de clapets multiples selon la revendication 1, **caractérisé en ce que** des éléments d'étanchéité (19) sont disposés sur les surfaces de plaques (132, 152) des plaques de canaux (13, 15) du côté arrière, lesquels assurent l'étanchéité entre les plaques de canaux (13, 15) et le boîtier (11).

3. Système de clapets multiples selon la revendication 1 ou 2, **caractérisé en ce que** des ouvertures de passage (20) sont prévues dans la plaque d'étanchéité (14), lesquelles relient entre eux les canaux d'écoulement sélectionnés (16) dans les deux plaques de canaux (13, 15).

4. Système de clapets multiples selon la revendication 2 ou 3, **caractérisé en ce que** le boîtier (11) est en deux parties et se compose de deux moitiés de boîtier (111, 112), dont chacune repose sur les éléments d'étanchéité (19) de l'une des plaques de canaux (13, 15), et **en ce que** les moitiés de boîtier (111, 112) sont serrées ensemble dans la direction de leur appui.

5. Système de clapets multiples selon la revendication 4, **caractérisé en ce que** le serrage est effectué au moyen d'un emboîtement par engagement par correspondance géométrique et par force.

6. Système de clapets multiples selon la revendication 5, **caractérisé en ce que** l'emboîtement est réalisé à la manière d'une fermeture à glissière s'étendant entre les moitiés de boîtier (111, 112) dans la direction longitudinale du boîtier.

7. Système de clapets multiples selon la revendication 6, **caractérisé en ce que** l'emboîtement de type fermeture à glissière se compose de rangées de nervures (21, 22) en forme de dents tournées les unes vers les autres sur les deux côtés longitudinaux des moitiés de boîtier (111, 112), lesquelles sont réalisées de telle sorte que les nervures (21, 22) d'une moitié de boîtier (111, 112) puissent être enfoncées par engagement par correspondance géométrique dans les espaces prévus entre les nervures (22, 21) de l'autre moitié de boîtier (112, 111), et que les nervures (21) d'une moitié de boîtier (111) soient emboîtées avec les nervures (22) de l'autre moitié de boîtier (112).

8. Système de clapets multiples selon la revendication 7, **caractérisé en ce que** l'emboîtement est effectué au moyen d'un connecteur à serrage à clavette (25) guidé dans la direction longitudinale du boîtier par-dessus chacune des deux rangées de nervures imbriquées les unes dans les autres, lequel vient en prise par l'arrière avec des surfaces de clavette (23, 24) correspondant à des biseaux (251) opposés l'un à l'autre qui sont réalisées sur les nervures (21, 22) successives dans la direction de glissement.

9. Système de clapets multiples selon l'une quelconque des revendications 4 à 8, **caractérisé en ce que** des actionneurs (10) pour l'actionnement d'organes de clapets coopérant avec les ouvertures d'entrée et/ou de sortie (17, 18) sur la surface de plaque (132, 152) de la plaque de canal associée (13, 15) du côté arrière, sont disposés sur chaque moitié de boîtier (111, 112).

10. Système de clapets multiples selon l'une quelconque des revendications 4 à 9, **caractérisé en ce que** des capteurs (27) sont disposés sur au moins une moitié de boîtier (111, 112), lesquels détectent l'écoulement de fluide au moyen de palpeurs pénétrant dans les ouvertures d'entrée ou de sortie (17, 18).
